# EUROPEAN PATENT SPECIFICATION

(11) **EP 2 640 305 B1**
(45) Date of publication and mention of the grant of the patent: **29.05.2019**
(21) Application number: 11785557.7
(22) Date of filing: 11.11.2011
(51) Int. Cl.: A61C 3/06, A61C 17/00, A46B 13/00

(54) **DENTAL ABRASIVE ASSEMBLY AND ASSEMBLING METHOD THEREFOR**
DENTALE SCHLEIFANORDNUNG UND MONTAGEVERFAHREN DAFÜR
ENSEMBLE ABRASIF DENTAIRE ET SA MÉTHODE D'ASSEMBLAGE

(30) Priority: 18.11.2010 US 415130 P
(43) Date of publication of application: 25.09.2013
(73) Proprietor: 3M Innovative Properties Company, St. Paul, MN 55133-3427 (US)
(72) Inventor: MAXA, Steven J.,, Saint Paul, Minnesota 55133-3427 (US); JACOBS, Dwight W., Saint Paul, Minnesota 55133-3427 (US)
(74) Representative: Vossius & Partner Patentanwälte Rechtsanwälte mbB
(86) International application number: PCT/US2011/060283
(87) International publication number: WO 2012/067951

(56) References cited:
- EP-A1- 0 044 701
- US-A- 4 636 171
- US-A- 5 334 020

## Description

### Field of the Invention

Provided is an assembly for abrading applications. More particularly, the assembly is directed to shaping, grinding and polishing applications for dental materials.

### Background

Dental abrasives are commonly used in the dental industry for shaping, grinding and polishing a variety of dental materials, such as natural teeth, dentures and restorative resins. These dental procedures are useful in optimizing bite function and providing a natural and aesthetic appearance for the patient.

Dental abrasive assemblies can assume many different configurations, depending on the desired application. For example, some assemblies use abrasive particles coated on a rotating disc. The disc typically has a circular or non-circular hole located at the center of rotation. The hole in the disc engages to a suitable rotary power tool configured to spin the disc at high speeds during use.

Other assemblies use an integral polymeric composite embedded with abrasive particles. The composite can be molded into a suitable shape to facilitate polishing of the dental substrate. Again these molded composites are generally coupled to a rotary power tool to bring the abrasive particles to bear on the substrate to be polished. These moldable composites have the advantage of providing great freedom to optimize the shape of the abrasive member to suit the particular application at hand.

Both coated abrasive discs and composites naturally wear out rapidly during an abrading operation. To facilitate the replacement of these discs and composites, abrasive assemblies often include a disposable "head" component along with a non-disposable "drive" component. The head component includes the dental abrasive and is configured to allow a dental practitioner to conveniently engage and disengage it from the drive component.
US 4,636,171 relates to a polishing tip for use on a mandrel driven by a dental engine including a cylindrical hollow interior which frictionally engages the mandrel. The cylindrical configuration of the tip interior and the mandrel allows relative slippage if a predetermined torque is exceeded.
EP 0 044 701 relates to a dental mandrel, circular in cross-section, and detachable abrasive disks useful in confined areas of the mouth, in which the disk can be mounted on and demounted from the mandrel using finger pressure, and the disk can optionally be rotated relative to the mandrel when the mandrel is at rest, but the disk is gripped sufficiently firmly when the mandrel is spinning that no slippage of the disk is apparent under dental grinding conditions. The working end of the mandrel has a knob-like terminal portion of circular shape in cross-section with a maximum diameter equal to or greater than the diameter of the circular hole in the grommet of the disk, a shoulder for the grommet and means for providing static disengagement and dynamic driving engagement between the knob-like terminal portion and the grommet.

Another document in the art is exemplified by US 5 334 020 A.

### Summary

While the use of a removable head component does provide a convenient way to replace the coated abrasive articles during or between abrading operations, several technical issues remain. For example, both the engagement and disengagement forces should be relatively low to allow easy user replacement of the head component. Yet, at the same time, these forces should be sufficiently high to prevent the abrasive member from wobbling or unintentionally dislodging from the power tool. Further, the mechanical coupling between the head and the drive components should also be sufficient to efficiently drive the head portion at high rotational speeds without slippage.

Provided are abrasive assemblies that combine a head portion including an integral abrasive member and a drive portion including a cylindrical mandrel. The abrasive member has a receptacle adapted to receive a working end of the mandrel. As the abrasive member engages to, or disengages from, the mandrel, the receptacle resiliently expands and the working end of the mandrel resiliently compresses, each in cooperation with the other. In some embodiments, the receptacle and working end of the mandrel are shaped to provide contact over an extended area between the two components. Optionally, the abrasive member is compressed in both directions parallel and directions perpendicular to the longitudinal axis of the mandrel.

In one aspect, a rotary dental abrasive assembly is provided. The rotary dental abrasive assembly comprises: a unitary abrasive member having a generally circular receptacle with a minimum inner diameter when the abrasive member is relaxed, the member comprising a resilient polymer composite comprising abrasive particles; and a generally cylindrical mandrel having an outer surface, a longitudinal axis and a bulbous working end received in the receptacle, the working end being divided into a plurality of sections by elongated slots extending from the outer surface of the mandrel toward the longitudinal axis, wherein the working end has an maximum outer diameter when relaxed and the plurality of sections and the abrasive member cooperatively deflect as the abrasive member is engaged to, and disengaged from, the mandrel.

In another aspect, a rotary dental abrasive assembly comprising: a unitary abrasive member having a generally circular receptacle with a concave inner surface, the member comprising a resilient polymer composite with abrasive particles distributed therein; and a generally cylindrical mandrel having an outer surface, a longitudinal axis and a bulbous working end received in the receptacle, the working end being divided into a plurality of sections by elongated slots radially extending from the outer surface of the mandrel toward the longitudinal axis, wherein the inner surface is complemental with the working end of the mandrel and the plurality of sections and the abrasive member cooperatively deflect as the abrasive member is engaged to, and disengaged from, the mandrel.

In still another aspect, a method of assembling a rotary dental polishing assembly is provided comprising: providing a mandrel having an outer surface, a longitudinal axis and a bulbous working end divided into a plurality of sections, the sections separated from each other by elongated slots extending from the outer surface toward the longitudinal axis; urging the working end toward a receptacle located on an abrasive member thereby inducing the plurality of sections to deflect resiliently toward each other as portions of the abrasive member around the receptacle resiliently expand; and retaining the working end against the receptacle such that the abrasive member contacts the mandrel along both concave and convex surfaces of the working end.

Advantageously, these abrasive assemblies and methods allow for increased manufacturing tolerances in both the abrasive member and mandrel. This benefit is achieved because the resilience of one member compensates for the manufacturing variability in the other member, and vice versa. Moreover, the resiliency of the mandrel provides freedom to use abrasive members with higher abrasive loadings, while still maintaining the same degree of retention and frictional engagement. The resilience of the mandrel also allows the walls of the abrasive member to be made thicker while maintaining the same retention and frictional engagement. Finally, the assembly as a whole can tolerate a much greater degree of mandrel wear while retaining adequate coupling between the abrasive member and mandrel. This increases reliability of the coupling and extends the operational lifetime of the mandrel.

### Brief Description of the Drawings

FIG. 1 is a perspective view of a dental abrasive assembly according to one embodiment;
FIG. 2 is a plan view of the assembly in FIG. 1;
FIG. 3 is a side cross-sectional view of the assembly in FIGS. 1-2 according to section "3-3" identified in FIG. 2;
FIG. 4 is a magnified side cross-sectional view of the assembly in FIGS. 1-3 presenting the circled region of FIG. 3 in greater detail;
FIG. 5a is a head-on view of a first component of the assembly in FIGS. 1-4;
FIG. 5b is a fragmentary elevational view of the component in FIG. 5a;
FIG. 6 is a cross-sectional view of a second component of the assembly in FIGS. 1-4;
FIG. 7 is a plan view of a dental abrasive assembly according to an example not being covered by the appended claims;
FIG. 8 is a side cross-sectional view of the assembly in FIG. 7 according to section "*8-8*" identified in FIG. 5;
FIG. 9 is a magnified side cross-sectional view of the assembly in FIGS 7-8 presenting the circled region of FIG. 8 in greater detail;
FIGS. 10a and 10b are perspective and cross-sectional views, respectively, of an abrasive member according to another embodiment; and
FIGS. 11a and 11b are perspective and cross-sectional views, respectively, of an abrasive member according to yet another embodiment.

### Detailed Description

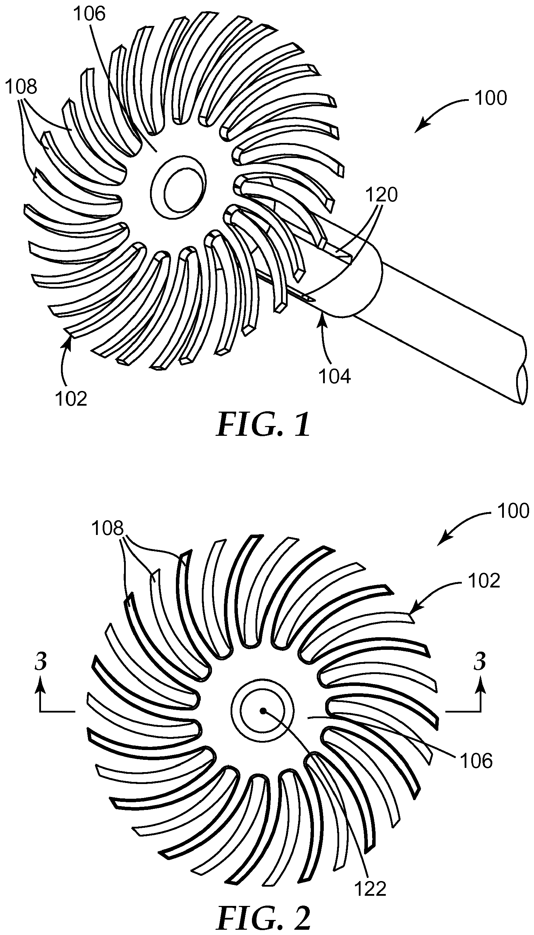

An abrasive assembly according to one embodiment is shown in FIGS. 1-4 and broadly designated by the numeral 100. The assembly 100 includes an abrasive member 102 and a mandrel 104 (visible in FIGS. 1, 3 and 4) that is coupled to the abrasive member 102.

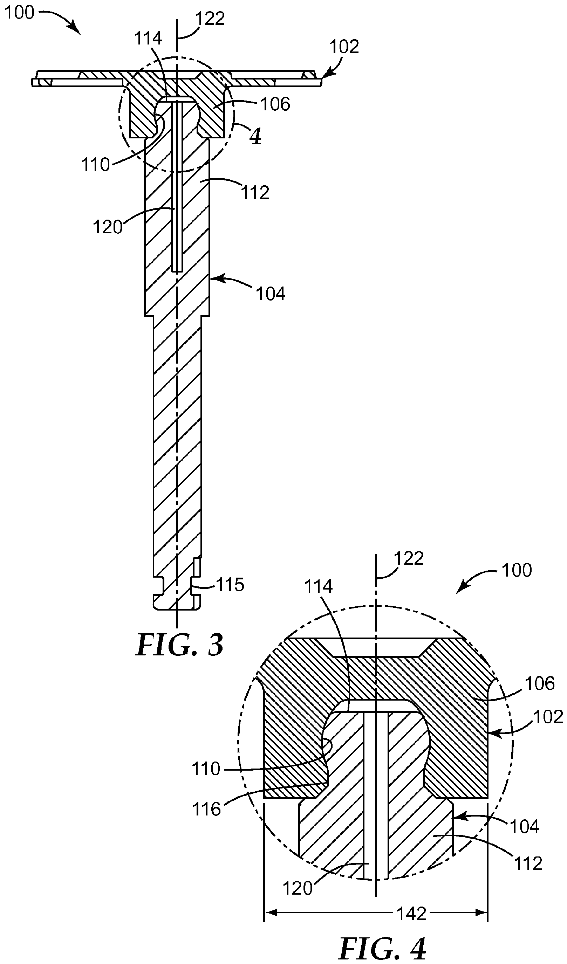

As shown in the FIGS. 1-2, the abrasive member 102 is a molded brush having a unitary construction, with a central annular hub 106 and a plurality of fingers 108 extending outwardly from the hub 106 in generally radial directions. In the embodiment shown here, the abrasive member 102 has thirty fingers 108. However, the number of fingers used could easily be made greater or smaller depending on the desired application. The hub 106 is symmetrically disposed about a longitudinal axis 122 that is perpendicular to the plane of the page in FIG. 2. Also symmetric about the longitudinal axis 122 and located on the opposite side of the hub 106 (visible in FIGS. 3 and 4) is a generally circular receptacle 110.

The abrasive member 102 is made from a composite abrasive, preferably a resilient polymeric composite abrasive. In some embodiments, the composite abrasive includes a thermoplastic material and abrasive particles distributed in the thermoplastic material.

In some embodiments, the abrasive member 102 comprises one or more thermoplastic elastomers. Thermoplastic elastomers include segmented polyester thermoplastic elastomers, segmented polyurethane thermoplastic elastomers, segmented polyamide thermoplastic elastomers, blends of thermoplastic elastomers and thermoplastic polymers, and ionomeric thermoplastic elastomers. Such segmented thermoplastic elastomers are further described in U.S. Pat. No. 5,903,951. Preferred thermoplastic elastomer polymers are segmented polyester thermoplastic elastomers, including those commercially available as HYTREL, available from E.I. duPont de Nemours, Wilmington, Delaware.

The abrasive member 102 need not be made from a thermoplastic elastomer. Instead, the abrasive member 102 may be comprised of a polymeric composite prepared from a conventional rubber or elastomeric material. These elastomeric materials include, for example, silicones, polyurethanes, and fluoropolymer elastomers.

In some embodiments, the abrasive particles are uniformly distributed in the abrasive member 102. The abrasive particles may be organic, inorganic, or a composite of either organic, inorganic, or both. The abrasive particle composition, concentration, and size can be tailored according to the nature of the intended workpiece surface and the desired effect of the molded brush on the workpiece surface.

Suitable inorganic particles can include those of silicon carbide, talc, garnet, glass bubbles, glass beads, cubic boron nitride, diamond, and aluminum oxide, including ceramic aluminum oxide such as that available as CUBITRON from 3M Company, St. Paul, Minnesota. Suitable organic abrasive particles include particles of comminuted thermoplastic or thermoset polymeric materials.

In some embodiments, the molded brush includes composite abrasive particles. Composite abrasive particles include agglomerates comprising inorganic particles adhered in an organic polymeric binder. Precisely shaped abrasive particles may also be employed. Sizes of abrasive particles may vary from mean particle diameters of less than 1 micrometer to particle mean diameters of up to about half the thickness of the molded brush bristle tip. The concentration of abrasive particles in the molded brushes may vary from zero to more than 50%.

As another option, the molded brushes may contain additives such as lubricants, colorants, coupling agents, compatibilizers, mold release agents, nucleating agents, and the like, as is known in the art.

Abrasive particles and additives may be incorporated into the moldable organic polymer at the time of molding, or alternatively, abrasive particles and/or additives may be compounded with the moldable organic polymer prior to molding. Subsequently, a masterbatch can be molded, or mixed with additional moldable organic polymer, or other masterbatches, and then molded.

The preferred dimensions and materials described herein are selected so as to allow molding the brush while maintaining the thermoplastic material at a sufficiently high temperature to fill the mold. With the benefit of the teachings found herein, one of skill in the art could select thicknesses, materials, and temperatures to mold brushes not necessarily falling within the particularly preferred dimensions set forth herein. Moreover, the location of the mold gates and thickness of the hub could be optimized by one of ordinary skill in the art. Further details on configurations of integrally molded brushes and methods of making the same are found in U.S. Patent No. 5,903,951 (Ionta et al.).

As shown in FIGS. 3 and 4, the assembly 100 further includes a mandrel 104 that is complementary to the abrasive member 102 and has a generally cylindrical shape. The mandrel 104 is generally symmetrical about its longitudinal axis 122, but need not have a uniform diameter or cross-sectional shape along its longitudinal axis 122. For example, as shown by the cross-sectional view of FIG. 3, the mandrel 104 includes sections having different diameters. Preferably, the mandrel 104 is made from a metal such as a 300- or 400- series stainless steel that permits autoclaving without issues of corrosion. Alternatively, the mandrel could be made from metals such as bronze or titanium, or even non-metallic materials, such as filled polymeric composites.

The mandrel 104 has a barrel section 112 and a bulbous working end 114 extending outwardly from the barrel section 112. The working end 114 has a maximum diameter that is somewhat smaller than that of the barrel section 112. Additionally, the working end 114 has a local diameter that varies with respect to its longitudinal axis 122, and further includes a neck 116 immediately adjacent the barrel section 114. By virtue of having a neck 116 with reduced diameter next to the barrel section 112, the working end 114 has an undercut that assists in retaining the abrasive member 102 on the mandrel 104 upon engagement. Optionally and as shown, there is a small gap between the bottom surface of the receptacle 110 and the outermost tip of the working end 114.

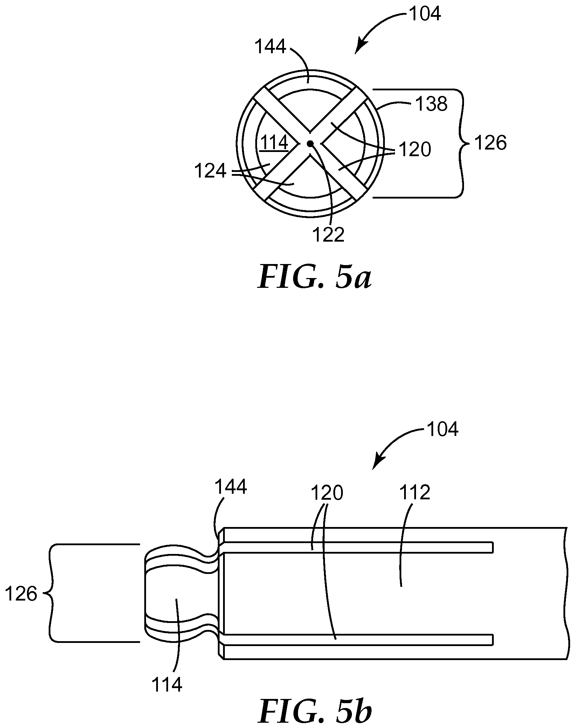

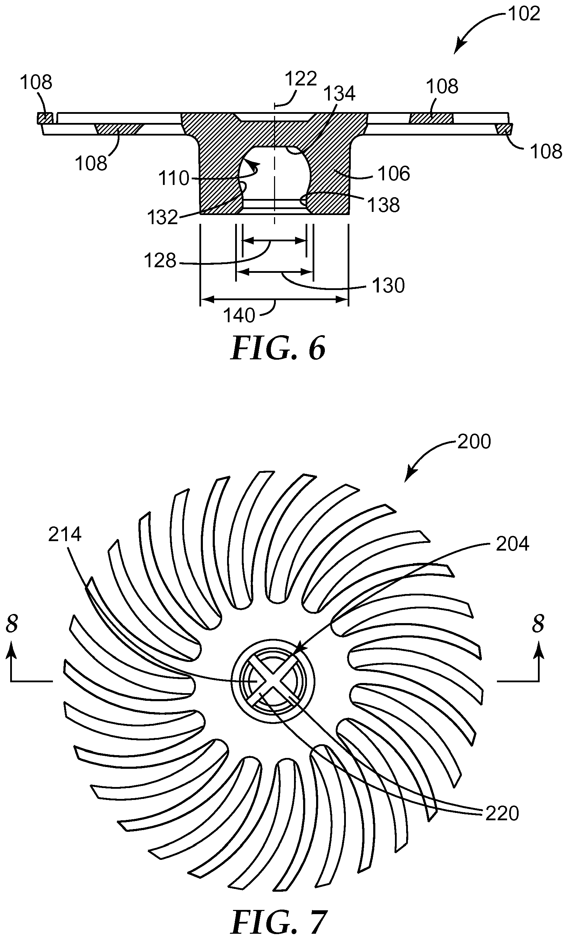

FIGS. 5a, 5b and 6 show additional features of the mandrel 104 and the abrasive member 102 in their relaxed configurations.

FIG. 5a is a head-on view of the working end 114 of the mandrel 104. As shown, the working end 114 is split into four discrete sections 124 by a pair of elongated slots 120 extending along radial directions from an outer surface 118 of the mandrel 104 toward the longitudinal axis 122 of the mandrel 104. The pair of elongated slots 120 intersect each other at the longitudinal axis 122, thereby dividing the working end 114 into sections 124 that are similar in size and shape. As further shown from the side view in FIG. 5b, the pair of elongated slots 120 not only traverse the working end 114 but also traverse a substantial length of the barrel 112.

While the particular number and orientation of the slots 120 shown were found to be especially suitable, these should not be deemed to be limiting. For example, if a reduced degree of deflection is desired, just a single slot may be used to divide the working end 114 into two sections. On the other hand, if a greater degree of deflection is desired, additional slots may be used to divide the working end 114 into more than four sections. In these alternative embodiments, the cross-sectional area of the sections decreases with the increasing number of divisions, thereby providing increased flexibility. If desired, the degree of deflection for a given compressive force can also be tailored by controlling the length of the slots 120 along the longitudinal axis of the barrel 112.

The mandrel 102 also includes a shoulder 144, located where the relatively large barrel 112 joins the relatively small working end 114. The shoulder 144 extends around the circumference of the mandrel 104 and provides a hard stop when seating the abrasive member 102 on the working end 114 of the mandrel 104, as shown in FIGS. 3 and 4. In some embodiments, the shoulder 144 has an overall diameter ranging from 60 to 90 percent of the maximum outer diameter 126 of the working end 114.

As shown in FIG. 3, the mandrel 104 also includes a drive end 115 located remote from the working end 114. As shown, the drive end 115 has features such as notches or undercuts that are asymmetric about the longitudinal axis 122 to facilitate mechanical coupling between the mandrel 104 and a power tool. A suitable power tool is capable of rotating the abrasive member 102 at high speeds during an abrading operation.

The complemental abrasive member 102 is shown in its relaxed configuration in FIG. 6, which reveals further aspects of the receptacle 110 and the hub 106. In particular, the receptacle 110 has an inner surface including concave side surfaces 132 and a generally flat bottom surface 134. The receptacle 110 has an overall shape generally complemental to that of the working end 114 when the mandrel 104 is relaxed. As shown, for example, the concave side surfaces 132 of the receptacle 110 substantially match the corresponding convex surfaces on the side surfaces of the working end 114. Additionally, the flat bottom surface 134 complements the tip of the working end 114, which is also flat.

Optionally and as shown, at least a portion of the side surfaces 132 or the bottom surface 134 complemental with the working end 114 faces in a direction with a component toward the direction of disengagement of the working end 114 from the receptacle 110. In other words, at least a portion of the inner surface complemental with the working end 114 has a normal vector with an axial component parallel to the longitudinal axis 122, where the axial component defines the direction of disengagement of the working end 114 from the receptacle 110.

As further defined in FIG. 6, the receptacle 110 has a passageway 138 with a minimum inner diameter 128 that provides a pre-determined level of resistance when the working end 114 of the mandrel is both engaged to, and disengaged from, the receptacle 110. The receptacle 110 also has a certain maximum inner diameter 130 located between the passageway 138 and the bottom surface 134.

The hub 106 surrounds, and is concentric with, the receptacle 110. As shown in FIG. 6, the hub 106 has a first hub diameter 140 when the abrasive member 102 is relaxed. Optionally, however, the hub 106 could assume other shapes, including shapes with variable diameter. In such cases, the first hub diameter 140 represents the largest diametric dimension of the hub 106 along the longitudinal axis 122.

Using gentle finger pressure, a dental practitioner snaps the abrasive member 102 onto the mandrel 104 to provide the configuration illustrated in FIG. 3. As shown in this figure, the working end 114 of the mandrel 104 is received in the receptacle 110 when the abrasive member 102 and the mandrel 104 are mutually engaged. As previously noted in FIGS. 5a and 5b, the working end 114 displays a maximum outer diameter 126 when relaxed. By virtue of the working end 114 being divided into four discrete sections 124 separated by the grooves 120, the working end 114 is resiliently compressed to a certain diameter somewhat smaller than the outer diameter 126 when the mandrel 104 is engaged to the abrasive member 102.

In more detail, as the dental practitioner urges the working end 114 toward the receptacle 110, the four sections 124 of the mandrel 104 and the hub 106 of the abrasive member 102 cooperatively deflect to allow the bulbous working end 114 to slide past the passageway 138. In other words, the sections 124 resiliently deflect inwardly toward each other as the receptacle 110 resiliently expands in diameter. The sections 124 have a tendency to spring back, or expand back, to their relaxed configurations. Advantageously, this exerts outward pressure on the inner surfaces of the receptacle 110 to assist in securing the abrasive member 102 on the mandrel 104.

As the working end 114 is fully seated in the receptacle 110, the sections 124 relax toward their original configuration and the receptacle 110 shrinks back toward its original diameter to create an interference fit. Advantageously, the abrasive member 102 contacts the mandrel 104 along both concave and convex surfaces of the working end 114 to assist in retaining the abrasive member 102 on the mandrel 104. As a further advantage, residual compressive forces acting between the abrasive member 102 and the mandrel 104 help prevent slippage, or relative rotation between the abrasive member 102 on the mandrel 104 during an abrading operation. The use of a unitary abrasive member 102 is also advantageous because abrasive particles directly contact the working end 114 of the mandrel 104, thereby enhancing the frictional coupling between the two components.

Advantageously, the minimum inner diameter 128 of the receptacle 110 and the maximum outer diameter 126 of the working end 114 are sized to provide both an interference fit and mechanical retention between the abrasive member 102 and mandrel 104. Preferably, the degree of interference between the abrasive member 102 and mandrel 104 exceeds 100 micrometers along the diameter of at least a portion the assembly 100. More preferably, the degree of interference exceeds 250 micrometers along the diameter of at least a portion of the assembly 100.

When the working end 114 is received in the receptacle 110, the hub 106 expands to assume a second hub diameter 142 that is greater than the first hub diameter 140. The second hub diameter 142 is measured at the same position along the hub as the first hub diameter 140. Preferably, the difference between the second hub diameter 142 and the first hub diameter 140 ranges from 1 to 50 percent of the difference between the maximum outer diameter 126 of the working end 114 and the minimum inner diameter 128 of the passageway 138 of the receptacle 110. More preferably, the difference between the second hub diameter 142 and the first hub diameter 140 ranges from 10 to 40 percent of the difference between the maximum outer diameter 126 and the minimum inner diameter 128. Most preferably, the difference between the second hub diameter 142 and the first hub diameter 140 ranges from 15 to 30 percent of the difference between the maximum outer diameter 126 and the minimum inner diameter 128.

The compressibility of the mandrel 104 also reduces the required degree of expansion of the abrasive member 102. Preferably, the abrasive member has a diameter (e.g. hub diameter or other radial dimension) that increases when the abrasive member 102 engages the mandrel 104 and the inward deflection of the sections 124 reduces the increase of the diameter by an amount ranging from 10 to 90 percent of the increase that would have been observed had the sections 124 been rigid (see Examples). More preferably, the inward deflection of the sections 124 reduces the increase of the diameter by an amount ranging from 30 to 70 percent of the increase that would have been observed had the sections 124 been rigid. Most preferably, the inward deflection of the sections 124 reduces the increase of the diameter by an amount ranging from 40 to 60 percent of the increase that would have been observed had the sections 124 been rigid.

In some embodiments, at least some portion of the abrasive member 102 is urged into one or more of the grooves 120 when the abrasive member 102 and the mandrel 104 are engaged to each other. This has a particular advantage of providing additional mechanical retention at the interface between the mandrel 104 and abrasive member 102 that restricts rotational slippage between these two components during an abrading operation.

The distribution, or sharing, of significant structural deflection between the abrasive member 102 and the mandrel 104 is advantageous in providing increased manufacturing tolerances for both of these components. As a further advantage, the composite material used to make the abrasive member 102 can be made substantially stiffer because the mandrel 104 is compressible. This in turn permits higher abrasive particle loadings and/or higher glass transition temperature (T_{g}) thermoplastic to be used than previously possible, thus facilitating the optimization of the abrasive member 102. If the stiffness of the abrasive member 102 is fixed, this configuration is still beneficial because it provides greater latitude to adjust the dimensions of the abrasive member 102 according to the application at hand.

As a further unique advantage, the assembly 100 not only induces compression of the abrasive member 102 along radial directions, but also along axial directions. For example, portions of the abrasive member 102 adjacent the neck 116 are compressed along directions parallel to the longitudinal axis 122 by opposing forces acting on the abrasive member 102 by the working end 114 and the shoulder 144. By compressing the abrasive member 102 along directions parallel and directions perpendicular to the longitudinal axis 122, the assembly 100 creates an interference fit over an extended area along the interface the abrasive member 102 and the mandrel 104, further enhancing the frictional coupling between the two components.

The combination of an expandable abrasive member 102 with a compressible mandrel 104 also presents practical advantages to the dental practitioner. Using two compliant, complemental members creates an interference fit that is evenly distributed over an extended interfacial area. This reduces slippage between the abrasive member 102 and the mandrel 104, and provides a high degree of control in the abrading operation. Spreading the interference fit over a comparatively large area also helps avoid "wobbling" of the abrasive member 102 at high rotational speeds. The use of two compliant members allows for higher filler loading in the abrasive member 102 while preserving low engagement and disengagement forces. Finally, the complemental configuration minimizes the effects of wear in the mandrel 104, extending its operational lifetime.

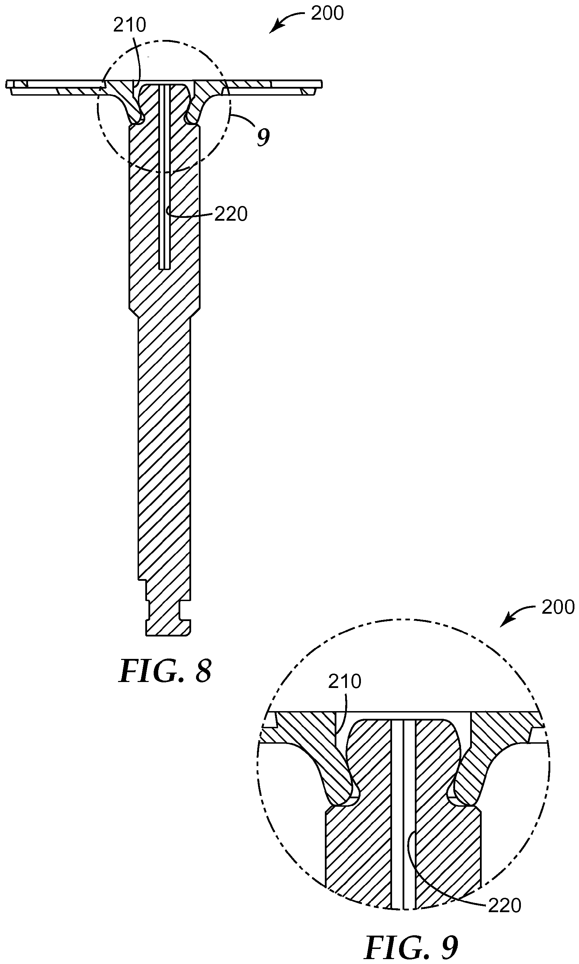

FIGS. 7-9 show an abrasive assembly 200 according to an alternative example. As shown in these figures, the assembly 200 includes an abrasive member 202 having a receptacle 210 and a mandrel 204 having a working end 214. Like the assembly 100, the working end 214 is received in the receptacle 210. Unlike the assembly 100, however, the receptacle 210 is an aperture in communication with opposing sides of the abrasive member 202. When fully engaged, the outer tip of the working end 214 is recessed within the receptacle 210 such that inadvertent contact cannot occur between the metallic working end 214 of the mandrel 204 and the patient's tooth or gingival tissue during an abrading operation.

Other aspects of the assembly 200 are similar to those of assembly 100 and shall not be repeated here.

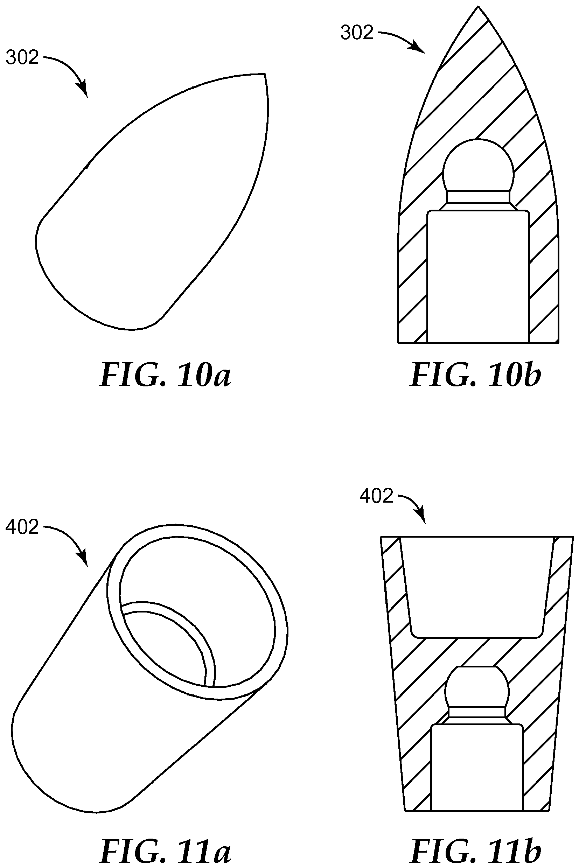

FIGS. 10a, 10b, 11a, and 11b show abrasive members 302 and 402 according to two additional embodiments. The abrasive member 302 has a pointed tip to allow a practitioner to access recessed areas of a patient's dental structure. In this embodiment, the abrasive member 402 has a ridged "cup" shape to allow a practitioner to access, for example, interproximal areas. Both of abrasive members 302,402 have receptacles adapted for use with the mandrel 104. Other aspects of the abrasive members 302,402 have been substantially described in the context of previous embodiments and will not be repeated here.

### EXAMPLES

### Abrasive disc preparation

Abrasive discs with a configuration similar to that shown in FIGS. 1-4, and 6 were designed to particular dimensions, and steel injection molds were fabricated according to those dimensions, which are shown in Table 1. Three different hub minimum inner diameters were made for testing purposes. For reference, the hub minimum inner diameter corresponds to 128 in Fig. 6, and the disc outer diameter is measured from bristle tip to bristle tip through the center of the hub, e.g. *3-3* in Fig. 2. The comparative abrasive disc having a metal eyelet hub had the minimum inner diameter measured across the center of the eyelet opening.

**Table 1**

| | Hub minimum inner diameter | Disc outer diameter |
|---|---|---|
| Example 1 | 0.072 in. (1.83 mm) | 0.564 in. (14.3 mm) |
| Example 2 | 0.075 in. (1.91 mm) | 0.564 in. (14.3 mm) |
| Example 3 | 0.078 in. (1.98 mm) | 0.564 in. (14.3 mm) |
| Comparative | 0.086 in. (2.18 mm) | |

Plastic pellets having the composition shown in Table 2 were compounded according to conventional methods.

**Table 2**

| Component | Manufacturer | Wt% |
|---|---|---|
| Hytrel 6356 thermoplastic elastomer | Dupont, Wilmington, DE | 20.755 |
| Hytrel 5526 thermoplastic elastomer | Dupont | 20.755 |
| Silicone Masterbatch MB 50-010 | Dow Corning, Midland, MI | 14.000 |
| P400 Treibacher Alodur FRPL Aluminum oxide | Treibacher, Austria | 38.000 |
| Pigment blend | Clariant, Minneapolis, MN | 6.49 |
| TOTALS | | 100.000 |

The plastic pellets were loaded into an extruder at 450 deg. F (232 deg. C) and injected into the injection mold, the mold was cooled and the finished part was removed, thus producing a finished abrasive disc.

The mandrel used for all examples was of monolithic construction and made from stainless steel. The mandrel was commercially available as an RA Mandrel, available with SOF-LEX brand Finishing and Polishing System, 3M ESPE, St. Paul, MN. Abrasive discs of the comparative example having a metal hub were also available with the SOF-LEX brand System.

### Measurement of removal force

The abrasive disc was inserted into the fixed jaw of an Instron (Norwood, MA) and a mandrel was inserted into the hub of the disc. The mandrel was then connected to the movable jaw which pulled the mandrel out of the hub. This removal force was measured in kilograms (kg). The sample size was five for each hub size. The results shown in Table 3 show the three sizes have slightly less removal force than the comparative example, but all three sizes had acceptable function in actual use.

**Table 3**

| | Hub minimum inner diameter | Removal force |
|---|---|---|
| Example 1 | 0.072 in. (1.83 mm) | 0.778 kg |
| Example 2 | 0.075 in. (1.91 mm) | 0.726 kg |
| Example 3 | 0.078 in. (1.98 mm) | 0.556 kg |
| Comparative | 0.086 in. (2.18 mm) | 0.848 kg |

### Measurement of rotational force of disc on mandrel

The abrasive disc was fixed in position and a mandrel was inserted into the hub. The mandrel was then connected to a torque tester which measures the rotational force required to cause the mandrel to slip in the hub. The sample size was 5 for each hub size. The data is shown in Table 4 and show that the rotational forces are less than the comparative example but adequate to function well under load when polishing a tooth.

**Table 4**

| | Hub minimum inner diameter | Rotational force |
|---|---|---|
| Example 1 | 0.072 in. (1.83 mm) | 0.134 inch-pounds (0.015 Newton-meters) |
| Example 2 | 0.075 in. (1.91 mm) | 0.097 inch-pounds (0.010 Newton-meters) |
| Example 3 | 0.078 in. (1.98 mm) | 0.066 inch-pounds (0.0007 Newton-meters) |
| Comparative | 0.086 in. (2.18 mm) | 0.23 inch-pounds (0.025 Newton-meters) |

### Measurements with abrasive disc and hub disengaged (relaxed)

Measurements were made with pin gauges for the abrasive disc minimum inner diameters, and an optical comparator for the mandrel outer diameters. The maximum inner diameter of the hub was less accessible to measuring devices, so was based on the designed dimension. The results are shown in Table 5. For reference, hub minimum inner diameter and mandrel minimum outer diameter correspond to 128 in Fig. 6, and hub maximum inner diameter and mandrel maximum outer diameter correspond to 130 in Fig. 6.

**Table 5**

| | Hub minimum inner diameter | Hub maximum inner diameter | Mandrel minimum outer diameter | Mandrel maximum outer diameter | Degree of interference (mandrel min. o.d. minus hub min. i.d.) |
|---|---|---|---|---|---|
| Example 1 | 0.072 in. (1.83 mm) | 0.088 (2.24 mm) | 0.089 in. (2.26 mm) | 0.092 in. (2.34 mm) | 0.017 in (0.43 mm) |
| Example 2 | 0.075 in. (1.91 mm) | 0.088 (2.24 mm) | 0.089 in. (2.26 mm) | 0.092 in. (2.34 mm) | 0.014 in. (0.36 mm) |
| Example 3 | 0.078 in. (1.98 mm) | 0.088 (2.24 mm) | 0.089 in. (2.26 mm) | 0.092 in. (2.34 mm) | 0.011 in. (0.28 mm) |
| Comparative | 0.086 in. (2.18 mm) | N/A | 0.089 in. (2.26 mm) | 0.092 in. (2.34 mm) | 0.003 in. (0.08 mm) |

### Measurements with abrasive disc and hub engaged

To measure the extent of mandrel compression during engagement with the abrasive disc, measurements of the outer diameter of the disc's hub were made using an optical comparator. The measurements were taken on the outside of the hub at a point corresponding to the minimum inner diameter of the inside of the hub, refer to 140 in Fig. 6. A first measurement (relaxed) was made without a mandrel inserted into the hub. A second measurement (slotted mandrel) was made with a slotted mandrel inserted into the hub of Example 2. A third measurement (solid mandrel) was made with a modified mandrel inserted into the hub of Example 2. To simulate a solid mandrel without slots, the slots of a slotted mandrel were filled with epoxy cement to prevent flexing of the segments. The results are shown in Table 6.

**Table 6**

| | Hub outer diameter, relaxed | Hub outer diameter, slotted mandrel | Hub outer diameter, solid mandrel |
|---|---|---|---|
| Example 2 | 0.184 in. (4.67 mm) | 0.188 in. (4.78 mm) | 0.192 in. (4.88 mm) |

### Performance during actual use

The abrasive discs and mandrels were assembled into a low speed air-driven handpiece (Model No. PD-58, Patterson Dental, St. Paul, Minnesota), operated at 0-17,000 rpm. This handpiece was outfitted to a conventional airmotor (Model No. PD-20 BC/RM, Patterson Dental, St. Paul, Minnesota) and dental unit (Model #5200, Forest Dental Products, Hillsboro, Oregon) and used to shape and polish a simulated restoration of Filtek Supreme composite (3M ESPE) with satisfactory results.

The embodiments described above are illustrative of the present invention and other constructions are also possible. Accordingly, the present invention should not be deemed limited to the embodiments described in detail above and shown in the accompanying drawings, but instead only by the scope of the claims that follow.

## Claims

1. A rotary dental abrasive assembly (100) comprising:
a unitary abrasive member (102) having a generally circular receptacle (110) with a minimum inner diameter when the abrasive member (102) is relaxed, the member comprising a resilient polymer composite comprising abrasive particles; and
a generally cylindrical mandrel (104) having an outer surface (118), a longitudinal axis (122) and a bulbous working end (114) received in the receptacle (110), the working end (114) having both concave and convex surfaces and the working end (114) being divided into a plurality of sections (124) by elongated slots (120) extending from the outer surface (118) of the mandrel (104) toward the longitudinal axis (122), wherein the working end (114) has an maximum outer diameter when relaxed and the plurality of sections (124) and the abrasive member (102) cooperatively deflect as the abrasive member (102) is engaged to, and disengaged from, the mandrel (104), wherein the abrasive member (102) contacts the mandrel (104) along both concave and convex surfaces of the working end (114) when the abrasive member (102) is engaged to the mandrel (104).

2. The assembly (100) of claim 1, wherein the inner diameter of the receptacle (110) and the outer diameter of the working end (114) are relatively sized to provide a degree of interference greater than 250 micrometers along the diameter of the assembly (100).

3. The assembly (100) of claim 1, wherein the working end (114) and the receptacle (110) assume respective shapes that are complemental with each other when the mandrel (104) and abrasive article are relaxed.

4. The assembly (100) of claim 1, wherein the abrasive member (102) further comprises an annular hub (106) that is concentric with the receptacle (110) and surrounds the working end (114), the hub (106) having a first hub diameter when relaxed and a second hub diameter when the working end (114) is received in the receptacle (110), wherein the difference between the second hub diameter and the first hub diameter ranges from 1 to 50 percent of the difference between the outer diameter of the working end (114) and the inner diameter of the receptacle (110).

5. The assembly (100) of claim 4, wherein the difference between the second hub diameter and the first hub diameter ranges from about 10 to 40 percent of the difference between the outer diameter of the working end (114) and the inner diameter of the receptacle (110).

6. The assembly (100) of claim 1, wherein the working end (114) is divided into at least four sections (124) by said at least two slots (120) that intersect each other along the longitudinal axis (122).

7. The assembly (100) of claim 1, wherein the mandrel (104) has a shoulder (144) adjacent the working end (114) and extending around the circumference of the mandrel (104).

8. The assembly (100) of claim 1, wherein at least a portion of the inner surface of the circular receptacle (110) has a normal vector with an axial component parallel to the longitudinal axis (122), the axial component defining the direction of disengagement of the working end (114) from the receptacle (110).

9. A method of assembling a rotary dental polishing assembly (100) according to any of claims 1 to 8, the method comprising:
urging the working end (114) toward the receptacle (110) located on the abrasive member (102) thereby inducing the plurality of sections (124) to deflect resiliently toward each other as portions of the abrasive member (102) around the receptacle (110) resiliently expand; and
retaining the working end (114) against the receptacle (110) such that the abrasive member (102) contacts the mandrel (104) along both concave and convex surfaces of the working end (114).

10. The method of claim 9, wherein the abrasive member (102) has a radial dimension that increases when the abrasive member (102) engages the mandrel (104), and wherein the inward deflection of the plurality of sections (124) reduces the increase of the radial dimension by an amount ranging from 10 to 90 percent of the increase that would have been observed had the sections (124) been rigid.

11. The method of claim 10, wherein the inward deflection of the plurality of sections (124) reduces the increase of the radial dimension by an amount ranging from 30 to 70 percent of the increase that would have been observed had the sections (124) been rigid.

12. The method of claim 10, wherein urging the working end (114) against the receptacle (110) compresses the abrasive article along directions parallel and directions perpendicular to the longitudinal axis (122), thereby enhancing mechanical retention between the abrasive article and the mandrel (104).

13. The method of claim 10, wherein the abrasive member (102) comprises a resilient polymer composite with abrasive particles distributed therein and the abrasive particles directly contact the working end (114) to enhance frictional coupling between the abrasive article and the mandrel (104).

## Patentansprüche

1. Rotierende Dentalschleiferbaugruppe (100), aufweisend:
ein einstückiges Schleifelement (102) mit einer allgemein kreisförmigen Aufnahme (110) mit einem minimalen Innendurchmesser, wenn das Schleifelement (102) entspannt ist, wobei das Element einen elastischen Polymerverbundstoff aufweist, der Schleifteilchen aufweist; und
einen allgemein zylindrischen Spanndorn (104) mit einer Außenoberfläche (118), einer Längsachse (122) und einem in der Aufnahme (110) aufgenommenen bauchigen Arbeitsende (114), wobei das Arbeitsende (114) sowohl eine konkave als auch eine konvexe Oberfläche aufweist und das Arbeitsende (114) durch längliche Schlitze (120), die sich von der Außenoberfläche (118) des Spanndorns (104) in Richtung der Längsachse (122) erstrecken, in mehrere Sektionen (124) unterteilt ist, wobei das Arbeitsende (114) einen maximalen Außendurchmesser aufweist, wenn es entspannt ist, und die mehreren Sektionen (124) und das Schleifelement (102) sich gemeinsam verbiegen, wenn das Schleifelement (102) mit dem Spanndorn (104) in Eingriff und außer Eingriff gebracht wird, wobei das Schleifelement (102) den Spanndorn (104) entlang sowohl der konkaven als auch der konvexen Oberfläche des Arbeitsendes (114) berührt, wenn das Schleifelement (102) mit dem Spanndorn (104) in Eingriff gebracht ist.

2. Baugruppe (100) nach Anspruch 1, wobei der Innendurchmesser der Aufnahme (110) und der Außendurchmesser des Arbeitsendes (114) relativ zueinander so bemessen sind, dass sie einen Grad an Überlagerung von mehr als 250 Mikrometern entlang des Durchmessers der Baugruppe (100) bereitstellen.

3. Baugruppe (100) nach Anspruch 1, wobei das Arbeitsende (114) und die Aufnahme (110) entsprechende Formen annehmen, die miteinander komplementär sind, wenn der Spanndorn (104) und ein Schleifartikel entspannt sind.

4. Baugruppe (100) nach Anspruch 1, wobei das Schleifelement (102) ferner eine ringförmige Nabe (106) aufweist, die mit der Aufnahme (110) konzentrisch ist und das Arbeitsende (114) umgibt, wobei die Nabe (106) einen ersten Nabendurchmesser, wenn sie entspannt ist, und einen zweiten Nabendurchmesser, wenn das Arbeitsende (114) in der Aufnahme (110) aufgenommen ist, aufweist, wobei die Differenz zwischen dem zweiten Nabendurchmesser und dem ersten Nabendurchmesser im Bereich von 1 bis 50 Prozent der Differenz zwischen dem Außendurchmesser des Arbeitsendes (114) und dem Innendurchmesser der Aufnahme (110) liegt.

5. Baugruppe (100) nach Anspruch 4, wobei die Differenz zwischen dem zweiten Nabendurchmesser und dem ersten Nabendurchmesser im Bereich von etwa 10 bis 40 Prozent der Differenz zwischen dem Außendurchmesser des Arbeitsendes (114) und dem Innendurchmesser der Aufnahme (110) liegt.

6. Baugruppe (100) nach Anspruch 1, wobei das Arbeitsende (114) durch die mindestens zwei Schlitze (120), die einander entlang der Längsachse (122) schneiden, in mindestens vier Sektionen (124) unterteilt ist.

7. Baugruppe (100) nach Anspruch 1, wobei der Spanndorn (104) eine an das Arbeitsende (114) angrenzende und sich um den Umfang des Spanndorns (104) herum erstreckende Schulter (144) aufweist.

8. Baugruppe (100) nach Anspruch 1, wobei zumindest ein Teil der Innenoberfläche der kreisförmigen Aufnahme (110) einen Normalvektor mit einer axialen Komponente parallel zur Längsachse (122) aufweist, wobei die axiale Komponente die Richtung des Außer-Eingriff-Bringens des Arbeitsendes (114) von der Aufnahme (110) definiert.

9. Verfahren zum Zusammenbauen einer rotierenden Dentalpoliererbaugruppe (100) nach einem der Ansprüche 1 bis 8, wobei das Verfahren Folgendes aufweist:
Drücken des Arbeitsendes (114) in Richtung der Aufnahme (110), die sich am Schleifelement (102) befindet, wodurch bewirkt wird, dass sich die mehreren Sektionen (124) elastisch aufeinander zu verbiegen, wenn Abschnitte des Schleifelements (102) sich elastisch um die Aufnahme (110) herum ausdehnen; und
Zurückhalten des Arbeitsendes (114) an der Aufnahme (110), sodass das Schleifelement (102) den Spanndorn (104) entlang sowohl der konkaven als auch der konvexen Oberfläche des Arbeitsendes (114) berührt.

10. Verfahren nach Anspruch 9, wobei das Schleifelement (102) eine radiale Abmessung aufweist, die zunimmt, wenn das Schleifelement (102) mit dem Spanndorn (104) in Eingriff kommt, und
wobei das nach innen gerichtete Verbiegen der mehreren Sektionen (124) die Zunahme der radialen Abmessung in einem Maß im Bereich von 10 bis 90 Prozent der Zunahme, die beobachtet worden wäre, wenn die Sektionen (124) starr wären, verringert.

11. Verfahren nach Anspruch 10, wobei die nach innen gerichtete Verbiegung der mehreren Sektionen (124) die Zunahme der radialen Abmessung in einem Maß im Bereich von 30 bis 70 Prozent der Zunahme, die beobachtet worden wäre, wenn die Sektionen (124) starr wären, verringert.

12. Verfahren nach Anspruch 10, wobei das Drücken des Arbeitsendes (114) gegen die Aufnahme (110) den Schleifartikel entlang Richtungen, die parallel und Richtungen, die senkrecht sind zur Längsachse (122), komprimiert, wodurch die mechanische Rückhaltung zwischen dem Schleifartikel und dem Spanndorn (104) verbessert wird.

13. Verfahren nach Anspruch 10, wobei das Schleifelement (102) einen elastischen Polymerverbundstoff mit darin verteilten Schleifteilchen aufweist und die Schleifteilchen das Arbeitsende (114) direkt berühren, um den Reibschluss zwischen dem Schleifartikel und dem Spanndorn (104) zu verbessern.

## Revendications

1. Ensemble abrasif dentaire rotatif (100) comprenant :
un élément abrasif monobloc (102) ayant un réceptacle généralement circulaire (110) avec un diamètre interne minimal lorsque l'élément abrasif (102) est relâché, l'élément comprenant un composite polymère élastique comprenant des particules abrasives ; et
un mandrin généralement cylindrique (104) ayant une surface externe (118), un axe longitudinal (122) et une extrémité de travail en forme de bulbe (114) reçue dans le réceptacle (110), l'extrémité de travail (114) ayant à la fois des surfaces concaves et convexes et l'extrémité de travail (114) étant divisée en une pluralité de sections (124) par des encoches allongées (120) s'étendant à partir de la surface externe (118) du mandrin (104) en direction de l'axe longitudinal (122), dans lequel l'extrémité de travail (114) a un diamètre externe maximal à l'état relâché et la pluralité de sections (124) et l'élément abrasif (102) fléchissent coopérativement à mesure que l'élément abrasif (102) est mis en prise avec le, et libéré du, mandrin (104), dans lequel l'élément abrasif (102) vient en contact avec le mandrin (104) le long à la fois des surfaces concaves et convexes de l'extrémité de travail (114) lorsque l'élément abrasif (102) est mis en prise avec le mandrin (104).

2. Ensemble (100) selon la revendication 1, dans lequel le diamètre interne du réceptacle (110) et le diamètre externe de l'extrémité de travail (114) sont dimensionnés de manière relative pour fournir un degré d'interférence supérieur à 250 micromètres le long du diamètre de l'ensemble (100).

3. Ensemble (100) selon la revendication 1, dans lequel l'extrémité de travail (114) et le réceptacle (110) prennent des formes respectives qui sont complémentaires l'une avec l'autre lorsque le mandrin (104) et l'article abrasif sont relâchés.

4. Ensemble (100) selon la revendication 1, dans lequel l'élément abrasif (102) comprend en outre un moyeu annulaire (106) qui est concentrique par rapport au réceptacle (110) et entoure l'extrémité de travail (114), le moyeu (106) ayant un premier diamètre de moyeu à l'état relâché et un deuxième diamètre de moyeu lorsque l'extrémité de travail (114) est reçue dans le réceptacle (110), dans lequel la différence entre le deuxième diamètre de moyeu et le premier diamètre de moyeu va de 1 à 50 pour cent de la différence entre le diamètre externe de l'extrémité de travail (114) et le diamètre interne du réceptacle (110).

5. Ensemble (100) selon la revendication 4, dans lequel la différence entre le deuxième diamètre de moyeu et le premier diamètre de moyeu va d'environ 10 à 40 pour cent de la différence entre le diamètre externe de l'extrémité de travail (114) et le diamètre interne du réceptacle (110).

6. Ensemble (100) selon la revendication 1, dans lequel l'extrémité de travail (114) est divisée en au moins quatre sections (124) par lesdites au moins deux encoches (120) qui se croisent l'une l'autre le long de l'axe longitudinal (122).

7. Ensemble (100) selon la revendication 1, dans lequel le mandrin (104) a un épaulement (144) adjacent à l'extrémité de travail (114) et s'étendant autour de la circonférence du mandrin (104).

8. Ensemble (100) selon la revendication 1, dans lequel au moins une partie de la surface interne du réceptacle circulaire (110) a un vecteur normal avec une composante axiale parallèle à l'axe longitudinal (122), la composante axiale définissant la direction de libération de l'extrémité de travail (114) par rapport au réceptacle (110).

9. Procédé d'assemblage d'un ensemble de polissage dentaire rotatif (100) selon l'une quelconque des revendications 1 à 8, le procédé comprenant :
la poussée de l'extrémité de travail (114) en direction du réceptacle (110) situé sur l'élément abrasif (102) en amenant de ce fait la pluralité de sections (124) à fléchir élastiquement les unes vers les autres à mesure que des parties de l'élément abrasif (102) autour du réceptacle (110) s'expansent élastiquement ; et
la rétention de l'extrémité de travail (114) contre le réceptacle (110) de telle sorte que l'élément abrasif (102) vient en contact avec le mandrin (104) le long à la fois des surfaces concaves et convexes de l'extrémité de travail (114).

10. Procédé selon la revendication 9, dans lequel l'élément abrasif (102) a une dimension radiale qui augmente lorsque l'élément abrasif (102) vient en prise avec le mandrin (104), et
dans lequel la déflexion vers l'intérieur de la pluralité de sections (124) réduit l'augmentation de la dimension radiale d'une quantité allant de 10 à 90 pour cent de l'augmentation qui aurait été observée si les sections (124) avaient été rigides.

11. Procédé selon la revendication 10, dans lequel la déflexion vers l'intérieur de la pluralité de sections (124) réduit l'augmentation de la dimension radiale d'une quantité allant de 30 à 70 pour cent de l'augmentation qui aurait été observée si les sections (124) avaient été rigides.

12. Procédé selon la revendication 10, dans lequel la poussée de l'extrémité de travail (114) contre le réceptacle (110) comprime l'article abrasif le long de directions parallèles et de directions perpendiculaires à l'axe longitudinal (122), ce qui renforce la rétention mécanique entre l'article abrasif et le mandrin (104).

13. Procédé selon la revendication 10, dans lequel l'élément abrasif (102) comprend un composite polymère élastique avec des particules abrasives réparties en son sein et les particules abrasives viennent directement en contact avec l'extrémité de travail (114) pour renforcer le couplage par frottement entre l'article abrasif et le mandrin (104).
